# EUROPÄISCHE PATENTANMELDUNG

(11) **EP 1 602 428 A1**
(43) Veröffentlichungstag der Anmeldung: **07.12.2005**
(21) Anmeldenummer: 04013086.6
(22) Anmeldetag: 03.06.2004
(51) Int. Cl.: B23B 47/28, F16B 13/00

(54) **Handgeführtes Elektrowerkzeug**

(71) Anmelder: A & M Electric Tools GmbH, 71364 Winnenden (DE); fischerwerke Artur Fischer GmbH & Co. KG, 72178 Waldachtal (DE)
(72) Erfinder: Fohr, Diethard, 71364 Winnenden (DE); Hess, Achim, 71404 Korb (DE)

(57) **Zusammenfassung**

Die Erfindung betrifft ein handgeführtes Elektrowerkzeug (1) mit einem Bohrwerkzeug (2) sowie ein Verfahren zur Herstellung eines Bohrloches (14) und zum Einsetzen des Dübels in das Bohrloch (14). Das Elektrowerkzeug (1) umfaßt einen auf das Bohrwerkzeug (2) wirkenden hochfrequenten Schwingungserreger (3), wobei das Bohrwerkzeug (2) in mindestens einer Eigenschwingungsfrequenz auf die Erregerfrequenz des hochfrequenten Schwingungserregers (3) abgestimmt ist. Das Bohrwerkzeug (2) ist als Bohrdübel (17) ausgebildet, der zum Verbleib in einem durch den Bohrdübel (17) mittels der hochfrequenten Schwingung hergestellten Bohrloch (14) vorgesehen ist.

## Beschreibung

Die Erfindung betrifft ein handgeführtes Elektrowerkzeug sowie ein Verfahren zum Herstellen eines Bohrloches und Einsetzen eines Dübels.

Es sind handgeführte Elektrowerkzeuge zur Herstellung von Bohrungen bekannt. Ein Bohrwerkzeug ist dabei an einer drehend antreibbaren Spindel eingespannt. Zum Ausführen einer Bohrung wird das Bohrwerkzeug in Drehung versetzt und gegen das zu bohrende Material geführt. Ein Bohrkopf des Bohrwerkzeuges ist mit Schneiden versehen, die in einer drehenden Schneidbewegung das Material abtragen. Die drehende Kreisbahnbewegung der Schneiden bewirkt eine zylindrische Ausgestaltung der Bohrung mit kreisförmigem Querschnitt.

In das zylindrische Bohrloch eines Betonbauteiles oder dgl. kann ein Dübel eingesetzt werden, der zur Aufnahme einer Schraube, einer Gewindestange oder dgl. vorgesehen ist. Mittels des Gewindes der Schraube bzw. der Gewindestange kann ein weiteres Teil am Betonbauteil befestigt werden, wobei ein Festziehen des Gewindes zu einem klemmenden Aufspreizen des Dübels und damit zu einer unverrückbaren Festlegung der Schraube am Betonbauteil führt. Die Klemmwirkung des Dübels ist abhängig von der maßgenauen Abstimmung des Bohrungsdurchmessers zum Durchmesser des Dübels. Schlag- bzw. Hammerwerksvibrationen der Bohrmaschine können zu einem Verlaufen des Bohrwerkzeuges beim Bohren führen. Es entsteht eine unrunde bzw. in ihrem Durchmesser vom Sollmaß abweichende Bohrung, in der ein eingesetzter Dübel seine volle Haltekraft nicht entfalten kann.

Bei einer großen Anzahl von mit dem gleichen Bohrwerkzeug ausgeführten Bohrungen tritt ein Verschleiß am Bohrkopf auf, der zu einem Untermaß des Bohrungsdurchmessers führen kann. Entsprechende Dübel können ggf. nicht in die zu kleine Bohrung eingesetzt werden.

Für bestimmte Anwendungsfälle kann es erwünscht sein, Bohrungen mit einer von der Zylinderform abweichenden Form auszuführen. Zur Befestigung von Dübeln in Bohrungen kann eine Hinterschneidung in der Bohrung erwünscht sein, die neben einer klemmenden Festlegung auch eine formschlüssige Festlegung des Dübels bewirkt, wodurch dessen Haltekraft gesteigert werden soll.

Zum Ausführen derartiger Bohrungen beispielsweise in Beton, Mauerwerk oder dgl. wird mittels eines Bohrhammers ein zylindrisches Loch vorgebohrt. Ein Schlagwerk des Hammerbohrers wirkt mit dem Bohrwerkzeug derart zusammen, daß axiale Schläge mittels des Bohrwerkzeuges auf den Schneidenbereich übertragen werden. Die entstehende Meißelwirkung führt in Verbindung mit der Drehbewegung des Bohrwerkzeuges zu einem Abtrag des zu bohrenden Materials.

Nachdem die gewünschte Bohrtiefe erreicht ist, wird mit der Bohrmaschine eine kreisförmig schwenkende Bewegung ausgeführt, in dessen Folge das Bohrloch im Bereich des Bohrkopfes aufgeweitet wird. Es entsteht eine sich in Bohrrichtung kegelförmig aufweitende Bohrungsform, deren Aufweitung eine im Querschnitt kreisförmige Hinterschneidung zur formschlüssigen Festlegung des Dübels bildet.

Die erzielbaren Hinterschneidungen sind in ihrer Form nur unpräzise ausführbar und hängen in ihrer Ausprägung stark vom Bediener ab. Das Bohrwerkzeug ist dabei hohen dynamischen Biegebelastungen ausgesetzt, die zu erhöhtem Verschleiß oder sogar zu einem Werkzeugbruch führen können. Der Betrieb des Schlag- bzw. Hammerwerkes bewirkt eine unangenehm hohe Geräusch- und Vibrationsbelastung der Umgebung und insbesondere der Bedienperson. Das Antriebsdrehmoment des Bohrers erfordert ein entsprechend hohes Haltemoment durch die Bedienperson. Der drehende Bohrer kann blockieren, was die Ausführung präziser Bohrungen erschwert. Die Form der herstellbaren Bohrungen ist auf eine Zylinder- oder Kegelform mit kreisförmigem Querschnitt beschränkt.

Der Erfindung liegt die Aufgabe zugrunde, ein handgeführtes Elektrowerkzeug zur Ausführung von Bohrungen mit einer verbesserten Möglichkeit zur Einsetzung von Dübeln anzugeben.

Diese Aufgabe wird durch ein handgeführtes Elektrowerkzeug mit den Merkmalen des Anspruchs 1 gelöst.

Eine weitere Aufgabe der Erfindung liegt darin, Bohrungen in Stein oder steinähnlichen Werkstoffen sowie ein Einfügen von Dübeln in entsprechende Bohrungen einfacher und zuverlässiger auszuführen.

Diese Aufgabe wird durch ein Verfahren mit den Merkmalen des Anspruchs 14 gelöst.

Es wird ein handgeführtes Elektrowerkzeug zur Aufnahme eines Bohrwerkzeuges vorgeschlagen, welches einen auf das Bohrwerkzeug wirkenden hochfrequenten Schwingungserreger umfaßt. Das Bohrwerkzeug ist dabei in mindestens einer Eigenschwingungsfrequenz auf die Erregerfrequenz des hochfrequenten Schwingungserregers abgestimmt. Die Erregerfrequenz und die Eigenschwingungsfrequenz liegen zweckmäßig oberhalb von 10 KHz und insbesondere im Ultraschallbereich. Im Betrieb des Elektrowerkzeuges sind der Schwingungserreger und das Bohrwerkzeug zumindest näherungsweise in Resonanz. Das zu entfernende bzw. abzutragende Material wird in dieser Resonanzfrequenz schlagend und ggf. unterstützend auch schneidend abgetragen. Das in seiner Eigenschwingungsfrequenz schwingende Bohrwerkzeug führt Schwingungen mit niedriger Amplitude und hoher Wirksamkeit aus, wobei zur Erregung dieser Schwingungen infolge der Resonanzwirkung nur sehr geringe Erregeramplituden von beispielsweise 20µm erforderlich sind. Die hochfrequente Erregung mit geringer Amplitude führt zu einer geringen mechanischen und akustischen Belastung der Umgebung. Das Elektrowerkzeug kann von Hand ruhig geführt werden. Bohrungen mit unterschiedlicher Kontur können feinfühlig und präzise ausgearbeitet werden.

Das Bohrwerkzeug ist dabei als der einzusetzende Dübel ausgebildet, der zum Verbleib in dem mit dem Bohrwerkzeug bzw. mit dem Dübel hergestellten Bohrloch vorgesehen ist. Der mittels des Elektrowerkzeuges zu Resonanzschwingungen angeregte Bohrdübel trägt das Material exakt in seiner eigenen Umfangskontur ab. Es entsteht eine eng den Bohrdübel umschließende Bohrung, in der der Bohrdübel hohe Klemmkräfte entwickeln kann. Dies gilt auch für Waben- oder Hohlblockziegel, Bimsstein oder dgl., bei welchen in konventioneller Bohrtechnik durch Ausbrüche zu große Bohrungen entstehen. Nach Ausführung der Bohrung kann der Bohrdübel zunächst wieder herausgezogen werden, um das Bohrloch von Staub oder dgl. zu befreien. Vorteilhaft wird der Bohrdübel nach Erreichen der vorgesehenen Bohrtiefe von der Spannvorrichtung entkoppelt und im Bohrloch belassen. Eine Beschädigung der Bohrlochwände bei weichen Werkstoffen wie Gasbeton, Gips oder dgl. ist vermieden. Für jede Bohrung wird ein neuer Bohrdübel eingesetzt, so daß verschleißbedingte Maßtoleranzen des Bohrloches nicht auftreten können.

In vorteilhafter Weiterbildung weist das Elektrowerkzeug eine Spannvorrichtung für den Bohrdübel in Form einer werkzeuglos betätigbaren Schnellspannvorrichtung auf. Die Schnellspannvorrichtung kann ein Backenfutter sein und ist zweckmäßig eine Spannzange, mit der der Bohrdübel paßgenau eingesetzt werden kann. Die Schnellspannvorrichtung erlaubt eine gute Energieübertragung zwischen dem Schwingungserreger und dem Bohrdübel. Bei einer Vielzahl auszuführender Bohrungen können die erforderlichen Bohrdübel mit wenigen Handgriffen und ohne ein zusätzliches Werkzeug in einfacher Weise am handgeführten Elektrowerkzeug eingespannt werden. Nach Ausführung der Bohrung ist ein schnelles Trennen der Verbindung zwischen dem Elektrowerkzeug und dem Bohrdübel möglich. Eine Trennung kann schnell und ohne großen Kraftaufwand erfolgen. Eine Schädigung des Bohrloches in Folge des Trennvorganges ist vermieden. Die Herstellung von Bohrungen und das Einsetzen der Dübel kann in einer schnellen Taktfolge geschehen.

Der Bohrdübel weist vorteilhaft eine Gewindestange auf, mit der er in der Spannvorrichtung des Elektrowerkzeuges gehalten ist. Der Bohrdübel selbst bzw. sein Grundkörper kann dabei ungehindert ohne Einschränkung durch die Spannvorrichtung schwingen. Es ist eine hohe Bohrleistung erzielbar. Die Gewindestange mit einem ggf. daran befestigten Spreizkopf wird bei der Herstellung der Bohrung gemeinsam mit dem Bohrdübel in die Bohrung eingesetzt. Ein zusätzlicher nachträglicher Montageaufwand entfällt.

In einer vorteilhaften Ausführung ist die Spannvorrichtung als Magnethalterung ausgeführt. Ein Einspannen des Bohrdübels und auch ein Trennen ist ohne großen Kraftaufwand möglich.
Die Magnetkraft reicht zum Fixieren des Bohrdübels, während die Übertragung der Schwingungsenergie vom Schwingungserreger auf den Bohrdübel durch Flächenpressung in Folge des von Hand aufgebrachten Anpreßdruckes herbeigeführt wird. Entsprechendes gilt auch für eine Halterung des Bohrdübels an der Spannvorrichtung, bei der entweder der Bohrdübel oder die Spannvorrichtung einen Hilfszapfen zum Aufstecken des Bohrdübels aufweist.

Die Spannvorrichtung ist zweckmäßig aus einem Material mit geringer Schallabsorption und insbesondere aus Titan gefertigt. Es hat sich gezeigt, daß die Schwingungsenergie des Schwingungserregers dabei zumindest nahezu verlustfrei zum Bohrkopf des Bohrdübels übertragen werden kann.

In einer zweckmäßigen Weiterbildung ist der Bohrdübel statisch fest und insbesondere drehfest in der Einspannung des Elektrowerkzeuges gehalten. Die statisch feste Einspannung des Bohrwerkzeuges bzw. des Bohrdübels bewirkt, daß dessen die Bohrung bewirkende Schwingbewegung im wesentlichen ausschließlich eine dynamische Eigenschwingung ist. Die feste Einspannung führt zu einer präzise definierten Eigenschwingfrequenz, die eine Abstimmung der Erregerfrequenz des Schwingungserregers auf das Gesamtsystem vereinfacht. Die drehfeste Einspannung des Bohrwerkzeuges bzw. des Bohrdübels erlaubt insbesondere in Verbindung mit einem unrunden Bohrkopf die Herstellung von Bohrungen mit einem von der Kreisform abweichenden Querschnitt. Nach Erreichen der gewünschten Bohrtiefe kann das Elektrowerkzeug gemeinsam mit dem drehfest eingespannten Bohrdübel gedreht werden, wobei die radial über den Schaft des Bohrdübels hervorstehenden Teile des Bohrkopfes eine in der Form präzise definierte Hinterschneidung gegenüber der unrunden Kernbohrung erzeugen.

Der Schwingungserreger ist vorteilhaft als Piezoerreger ausgebildet. Die über ein Netzkabel oder einen Akku bereitgestellte elektrische Energie wird mittels des Piezoerregers mit hohem Wirkungsgrad in mechanische Schwingungsenergie umgewandelt. In Verbindung mit den hohen Erregungs- und Eigenfrequenzen können hohe Bohrleistungen mit vergleichsweise geringer Antriebsenergie erzielt werden. Das Elektrowerkzeug kann klein, leicht und handlich ausgeführt sein.

Es ist vorteilhaft im Bereich des Bohrwerkzeuges eine Absaugeinrichtung für Bohrstaub vorgesehen. Das Fehlen einer Bohrmehlabfuhr durch die nach dem Stand der Technik übliche spiralige Bohrmehlnut in Verbindung mit einer Drehbewegung des Bohrers kann durch die Absaugeinrichtung in einfacher Weise kompensiert werden.

In einer zweckmäßigen Ausführung ist im Bereich des Bohrwerkzeuges eine Zuführeinrichtung für eine insbesondere mit abrasiven Bohrhilfsmitteln versehene Bohrflüssigkeit vorgesehen. Es können Bohrdübel mit vielfältig ausgeführten Bohrköpfen auch ohne Schneide eingesetzt werden. Die abtragende Schwingbewegung des Bohrkopfes beispielsweise mit flacher Stirnfläche wird durch die abrasiven Bohrhilfsmittel wie Diamantstaub oder dgl. wirkungsvoll unterstützt. Die Bohrflüssigkeit führt dabei das ausgebohrte Material unter Vermeidung von Staubentwicklung ab.

Die Absaugeinrichtung bzw. die Zuführeinrichtung umfaßt zweckmäßig einen Sammler, der mit einem am Bohrdübel angeordneten Saug-/Spülkanal verbunden ist. Der Saug-/Spülkanal kann innenseitig oder auf der Außenfläche des Bohrdübels vorgesehen sein. Die Verbindung des Sammlers mit dem Saug-/Spülkanal im Bohrwerkzeug erlaubt eine universelle Einsetzbarkeit. Beispielsweise kann Luft durch den Sammler und den Saug-/Spülkanal angesaugt werden, wobei das im Bereich des Bohrkopfes abgetragene Bohrmehl unter Vermeidung von Staubentwicklung direkt am Abtragungsort abgesaugt wird. Die gleiche Anordnung kann auch in umgekehrter Richtung durchströmt sein. Bei der Durchströmung mit Luft kann das Bohrmehl wirkungsvoll aus dem Bohrloch ausgeblasen werden. Ebenso kann eine Bohrflüssigkeit beispielsweise in Form von Wasser mit Diamantstaub durch den Sammler und den Saug-/Spülkanal zum Bohrkopf gepumpt werden. Es ist eine gezielte Dosierung möglich. Beispielsweise mit zwei Sammlern kann ein geschlossenes System gebildet werden, mit dem Luft oder die Bohrflüssigkeit zugeführt und auch wieder abgesaugt wird.

Mit dem vorgenannten Elektrowerkzeug in Verbindung mit dem vorgenannten, als Bohrdübel ausgeführten Bohrwerkzeug können Bohrungen in Stein oder steinähnlichen Werkstoffen wie Beton oder Mauerwerk oder dgl. präzise hergestellt werden. Der in der Bohrung verbleibende Bohrdübel sitzt paßgenau in der von ihm selbst erzeugten Bohrung. Es können insbesondere unrunde Bohrungen mit Hinterschneidung und hoher Formgenauigkeit hergestellt werden, die zur klemmenden und formschlüssigen Festlegung entsprechender Bohrwerkzeuge in Form von Spreizdübeln geeignet sind.

Ausführungsbeispiele der Erfindung sind im folgenden anhand der Zeichnung näher beschrieben. Es zeigen:
- Fig. 1: in einer schematischen Perspektivdarstellung ein handgeführtes Elektrowerkzeug mit einem Piezoerreger und einem drehfest eingespannten Bohrwerkzeug in Form eines Bohrdübels;
- Fig. 2: eine Variante des Bohrdübels nach Fig. 1 mit einem radial hervorstehenden Bohrkopf;
- Fig. 3: in einer schematischen Draufsicht ein Bauteil mit einer dreieckig ausgeführten Bohrung mit kreisrundem Hinterschnitt;
- Fig. 4: eine schematische Schnittdarstellung des Bauteils nach Fig. 3 mit Einzelheiten zur Hinterschneidung der Bohrung und mit eingesetztem Bohrdübel nach Fig. 2;
- Fig. 5: eine Variante der Anordnung nach Fig. 1 mit einem weiteren, den Bohrdübel umgreifenden Sammler;
- Fig. 6: in einer vergrößerten Detailansicht den Bohrdübel nach Fig. 5 mit Einzelheiten seines selbsttätig aufspreizenden Bohrkopfes;
- Fig. 7: Einzelheiten der als Spannzange ausgeführten Spannvorrichtung nach Fig. 5;
- Fig. 8: eine Variante der Spannvorrichtung nach Fig. 7 in Form einer Magnethalterung;
- Fig. 9: eine weitere Variante der Spannvorrichtung mit einem zum Aufstecken des Bohrdübels vorgesehenen Hilfszapfen.

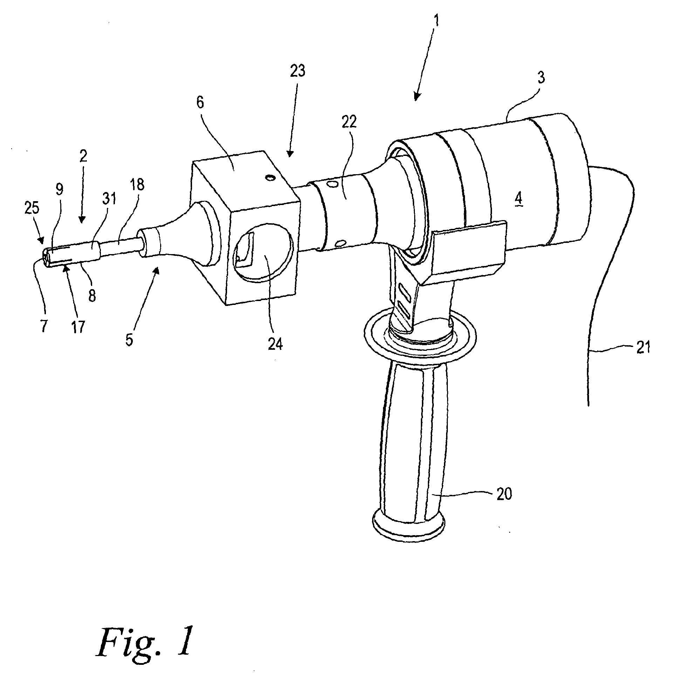

Fig. 1 zeigt in einer perspektivischen Übersichtsdarstellung ein Elektrowerkzeug 1 mit einem Schwingungserreger 3, einem sogenannten Booster 22, einem Handgriff 20 und einem Anschlußkabel 21. An einem werkzeugseitigen Ende 23 des Elektrowerkzeuges 1 ist eine Spannvorrichtung 5 vorgesehen, in der ein Bohrwerkzeug 2 statisch fest und insbesondere bezogen auf das Elektrowerkzeug 1 drehfest eingespannt ist. Der Handgriff 20 ist im gezeigten Ausführungsbeispiel am Schwingungserreger 3 schwingungsgedämpft befestigt, kann aber auch beispielsweise am Booster 22 entsprechend festgelegt sein.

Der Schwingungserreger 3 ist im gezeigten Ausführungsbeispiel als Piezoerreger 4 ausgeführt, der über das Anschlußkabel 21 von einem nicht dargestellten elektrischen Schwingungsgenerator mit elektrischer Energie versorgt ist. Es kann dafür ein Netz- oder auch ein Akkubetrieb vorgesehen sein. Die von dem Piezoerreger 4 durch elektrische Anregung erzeugten mechanischen Schwingungen werden mittels des sogenannten Boosters 22 in ihrer Amplitude verstärkt und auf das in der Spannvorrichtung 5 eingespannte Bohrwerkzeug 2 übertragen.

Die Erregerfrequenzen des Piezoerregers 4 liegen im gezeigten Ausführungsbeispiel im Ultraschallbereich bei ca. 20 kHz. Das einseitig fest eingespannte Bohrwerkzeug 2 ist in seinen Eigenschwingungsfrequenzen so ausgelegt, daß es zumindest mit einem Eigenmode in Resonanz zur Erregerfrequenz des Piezoerregers 4 steht. Die geometrische Ausbildung des Bohrwerkzeuges 2 ist dabei vorteilhaft so gewählt, daß mehrere Eigenmoden in ihrer Frequenz nahe beieinander liegen, wobei der entsprechend abgestimmte Piezoerreger 4 eine Resonanzerregung der verschiedenen Eigenmoden bewirkt. Es kommen dabei Longitudinal-, Transversal- und Torsionsschwingungen in Betracht.

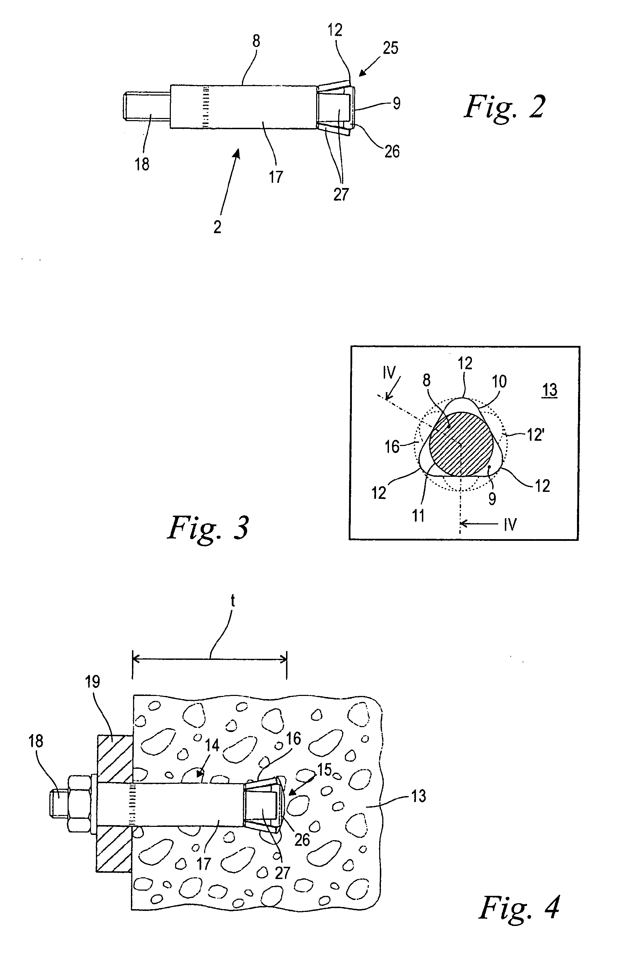

Das Bohrwerkzeug 2 ist als zylindrischer Bohrdübel 17 aus Stahl mit einem Grundkörper 31 und einer darin gehaltenen Gewindestange 18 ausgebildet. Der Bohrdübel 17 ist dabei mittels der Gewindestange an der Spannvorrichtung 5 gehalten. Die Schwingungsenergie des Schwingungserregers 3 wird von der Spannvorrichtung 5 über die Gewindestange 18 auf den Grundkörper 31 übertragen. Die Gewindestange 18 und der Grundkörper 31 sind außen und innen und damit auch an ihren gegenseitigen Berührflächen vollflächig beschichtet. Der Bohrdübel 17 ist als Spreizdübel zur klemmenden Befestigung in einem im Zusammenhang mit Fig. 4 näher beschriebenen Betonbauteil 13 vorgesehen. Es kann auch eine Ausbildung als Kipp- oder Klappdübel zur formschlüssigen Hinterschneidung einer Gipskartonplatte oder dgl. vorteilhaft sein. Ein freies Ende 25 des Bohrdübels 17 ist als Bohrkopf 9 ausgeführt, der die gleiche zylindrische Außenkontur aufweist, wie ein sich daran anschließender Schaft 8 des Bohrdübels 17.

Der an dem Schaft 8 des Bohrwerkzeuges 2 angeordnete Bohrkopf 9 kann über die entsprechenden Schwingungen bei einer auszuführenden Bohrung Material in axialer, in radialer und in Umfangsrichtung abtragen.

Im Bereich des geräteseitigen Endes vom Bohrwerkzeug 2 ist ein Sammler 6 vorgesehen, dessen Innenraum in strömungsleitender Verbindung mit einem innenseitig durch das Bohrwerkzeug 2 koaxial verlaufenden Saug-/Spülkanal 7 in Verbindung steht. Zur Bildung des Saug-/Spülkanales 7 sind die Gewindestange 18 und der Grundkörper 31 rohrförmig ausgeführt. Der Saug-/Spülkanal 7 kann auch als außenseitige Nut am Bohrdübel 17 angeordnet sein. Der Sammler 6 weist eine seitliche Anschlußöffnung 24 auf, über die Bohrstaub von der stirnseitigen Mündung des Saug-/Spülkanales 7 aus dem Bereich des Bohrkopfes 9 abgesaugt werden kann. Es kann auch umgekehrt Luft durch die Anschlußöffnung 24 und den Saug-/Spülkanal 7 in die auszuführende Bohrung eingeblasen werden. Ebenso kann eine Bohrflüssigkeit beispielsweise in Form von Wasser mit einem abrasiven Bohrhilfsmittel wie Diamantstaub oder dgl. durch die Anschlußöffnung 24 und den Saug-/Spülkanal 7 in die Bohrung direkt in den Bereich des Bohrkopfes 9 eingeleitet werden.

Fig. 2 zeigt eine Variante des Bohrwerkzeuges 2 bzw. des Bohrdübels 17 nach Fig. 1. Die Gewindestange 18 durchgreift den Bohrdübel 17 in Längsrichtung und weist im Bereich des freien Endes 25 einen kegelförmigen Spreizkopf 26 auf. Eine Anzahl von schräg aufgeweiteten Spreizlaschen 27 des Bohrdübels 17 sind um den Umfang des Spreizkopfes 26 verteilt angeordnet und stehen radial mit Ecken 12 über den zylindrischen Schaft 8 hervor. Die Spreizlaschen 27 bilden zusammen mit dem Spreizkopf 26 einen unrunden Bohrkopf 9.

Fig. 3 zeigt in einer schematischen Draufsicht ein Betonbauteil 13, beispielhaft aus Gasbeton. Es kann auch ein Naturstein, Beton, Mauerwerk oder dgl. sowie auch ein Holzwerkstoff, Metall oder ein Kunststoff in Frage kommen. Der Schaft 8 des Bohrwerkzeuges 2 bzw. des Bohrdübels 17 (Fig. 2) weist eine kreisrunde Querschnittskontur 11 auf, die innenseitig an die beispielhaft dreieckige, durch die Spreizlaschen 27 (Fig. 2) gebildete Querschnittskontur 10 des Bohrkopfes 9 angrenzt. Die Querschnittskontur 10 des Bohrkopfes 9 ragt dabei im Bereich der gerundet ausgeführten Ecken 12 radial über die Querschnittskontur 11 des Schaftes 8 hinaus. Zum Ausführen des Bohrloches 14 nach Fig. 4 wird das in Resonanz schwingende Bohrwerkzeug 2 (Fig. 2) in axialer Richtung gegen das Betonbauteil 13 geführt, wobei durch die abrasive Wirkung des schwingenden Bohrkopfes 9 das Bohrloch 14 (Fig. 4) entsteht, dessen Querschnittsform der Querschnittskontur 10 des Bohrkopfes 9 entspricht. Im gezeigten Ausführungsbeispiel entsteht ein Bohrloch 14 mit gerundet dreieckigem Querschnitt.

Nach Erreichen der gewünschten Bohrtiefe wird das Elektrowerkzeug 1 mit dem drehfest eingespannten Bohrwerkzeug 2 (Fig. 2) langsam um die Längsachse des Bohrwerkzeuges 2 gedreht, bis die Ecken 12 beispielsweise die gestrichelt dargestellte und mit 12' bezeichnete Position nach Fig. 3 erreicht haben. Durch weiteres Drehen des Elektrowerkzeuges 1 erzeugen die Ecken 12 durch Abtrag des Materials aus dem Betonbauteil 13 eine etwa kreisförmige Hinterschneidung 16 gegenüber der dreieckigen Querschnittskontur 10 der Bohrung 26.

Fig. 4 zeigt eine schematische Schnittdarstellung des Betonbauteils 13 entlang der Linie IV-IV nach Fig. 3. Demnach ist im Bohrungsgrund des Bohrloches 14 die radial und konisch aufgeweitete Hinterschneidung 16 gebildet, in der der Bohrdübel 17 nach Fig. 2 formschlüssig und klemmend befestigt ist. Der Bohrdübel 17 nimmt die Gewindestange 18 auf. An der Gewindestange 18 ist ein angedeutetes Werkstück 19 gehalten, wobei durch Festziehen der Verschraubung neben dem Formschluß an der Hinterschneidung 16 auch eine Klemmwirkung durch Aufspreizen der Spreizlaschen 27 mittels des Spreizkopfes 26 eintritt.

Das Bohrloch 14 ist mit dem zu Schwingungen angeregten Bohrdübel 17 gebohrt worden. Nach dem eine gewünschte Bohrtiefe t erreicht und die bajonettartige Drehbewegung nach Fig. 3 vollzogen wurde, wurde der Bohrdübel 17 von der Spannvorrichtung 5 (Fig. 1) entkoppelt, wobei der Bohrdübel 17 in dem Bohrloch 14 verblieben ist. Eine vergleichbare Herstellung des Bohrloches 14 und Einbringung des Bohrdübels 17 ergibt sich auch für eine zylindrische Ausführung des Bohrdübels 17 nach Fig. 1, wobei lediglich keine Hinterschneidung 16 ausgebildet wird.

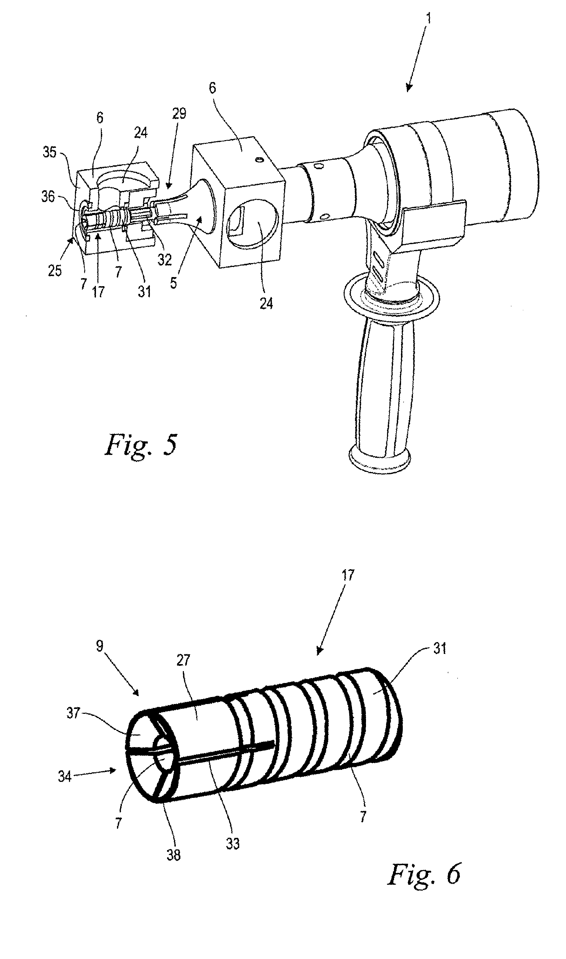

Fig. 5 zeigt eine Variante der Anordnung nach Fig. 1, bei der zusätzlich zu dem Sammler 6 im Bereich der Spannvorrichtung 5 ein weiterer, den Grundkörper 31 des Bohrdübels 17 umschließender Sammler 6 vorgesehen ist. Der Bohrdübel 17 weist einen innenseitig verlaufenden Saug-/Spülkanal 7 auf, der vom freien Ende 25 aus längs durch den Bohrdübel 17 verläuft und mit dem geräteseitigen Sammler 6 verbunden ist. Außenseitig des Grundkörpers 31 ist ein weiterer, hier wendelförmig verlaufender Saug-/Spülkanal 7 vorgesehen, der mit einer Anschlußöffnung 24 des den Grundkörper 31 umschließenden Sammlers 6 strömungsleitend verbunden ist.

Der dübelseitige Sammler 6, von dem der besseren Übersichtlichkeit halber in geschnittener Darstellung nur eine Hälfte gezeigt ist, ist an seiner in Bohrrichtung liegenden Stirnfläche 35 mit einem ringförmig den Bohrdübel 17 umschließenden Dichtring 36 versehen. Beim Ausführen einer Bohrung wird der Dichtring 36 gegen das Betonbauteil 13 (Fig. 4) gedrückt, wodurch eine geschlossene, strömungsleitende Verbindung zwischen den beiden Sammlern 6 über die beiden Saug-/Spülkanäle 7 gebildet ist. Dabei kann wahlweise von außen nach innen, also vom dübelseitigen Sammler 6 hin zum werkzeugseitigen Sammler 6 oder auch in umgekehrter Richtung Luft oder eine Bohrflüssigkeit gepumpt und/oder gesaugt werden. Im Bereich des freien Endes 25 vom Bohrdübel 17 ist ein geschlossenes, strömungsleitendes System gebildet, aus dem frei werdendes Bohrmehl oder dgl. zumindest näherungsweise vollständig abtransportiert werden kann.

Der Bohrdübel 17 weist auf seiner dem Elektrowerkzeug 1 zugewandten Seite einen Hilfszapfen 32 auf, mit dem der Bohrdübel 17 an der Spannvorrichtung 5 gehalten ist. Die Spannvorrichtung 5 ist an ihrem dübelseitigen Ende als werkzeuglos betätigbare Schnellspannvorrichtung ausgebildet, die im gezeigten Ausführungsbeispiel als Spannzange 29 ausgeführt ist. Die Spannvorrichtung 5 ist dabei aus einem Material mit geringer Schallabsorption gefertigt, wozu im gezeigten Ausführungsbeispiel Titan bzw. eine Titanlegierung als Werkstoff gewählt ist.

Fig. 6 zeigt in einer vergrößerten Detailansicht den Grundkörper 31 des Bohrdübels 17 nach Fig. 5 mit seinem außen liegenden, wendelförmig in Achsrichtung verlaufenden, als Nut ausgebildeten Saug-/Spülkanal 7. Der Grundkörper 31 ist unverformt gezeigt und weist dabei eine im wesentlichen zylindrische Form auf, die sich über die gesamte Länge des Grundkörpers 31 einschließlich des am freien Ende 25 (Fig. 5) liegenden Bohrkopfes 9 erstreckt. Der Grundkörper 31 weist im Bereich des Bohrkopfes 9 beispielhaft vier Längsschlitze 33 auf, die parallel zur Längsachse des Grundkörpers 31 etwa über dessen halbe Länge verlaufen. Sie teilen dabei die Wand des rohrförmigen Grundkörpers 31 in vier voneinander getrennte Spreizlaschen 27 auf.

Eine Stirnseite 34 des Bohrkopfes 9 ist konkav gewölbt ausgeführt, wobei im gezeigten Ausführungsbeispiel eine konkave Kegelfläche 37 gebildet ist. Es kann auch zweckmäßig sein, die Spreizlaschen 27 mit schräg nach innen gestellten ebenen Flächen, mit einer Kugelkalottenfläche oder dgl. zu versehen. Beim Übergang der Kegelfläche 37 in die Mantelfläche des zylindrischen Grundkörpers 31 ist eine ringförmige Schneidkante 38 gebildet.

Aus dem funktionalen Zusammenspiel der Schneidkante 38 mit der Kegelfläche 37 und den Längsschlitzen 33 ergibt sich eine Ausführung des Grundkörpers 31, dessen Bohrkopf 9 sich beim Bohren selbsttätig aufspreizt. Der beim Bohren aufgebrachte Anpreßdruck auf die Kegelfläche 37 wirkt über die Schrägstellung der Kegelfläche 37 relativ zur Längsachse des Grundkörpers 31 mit einer radialen, nach außen gerichteten Kraftkomponente auf die Spreizlaschen 27. Die Spreizlaschen 27 erfahren dabei mit zunehmender Bohrtiefe eine radiale Aufweitung, wobei insbesondere die sich aufweitende Schneidkante 38 eine kegelförmige, in Bohrrichtung sich erweiternde Bohrungsform herbeiführt. Im verformten Zustand sind die Spreizlaschen 27 nach außen aufgeweitet und führen damit zu einer formschlüssigen Befestigung in der kegelförmig in Bohrungsrichtung sich erweiternden Bohrung.

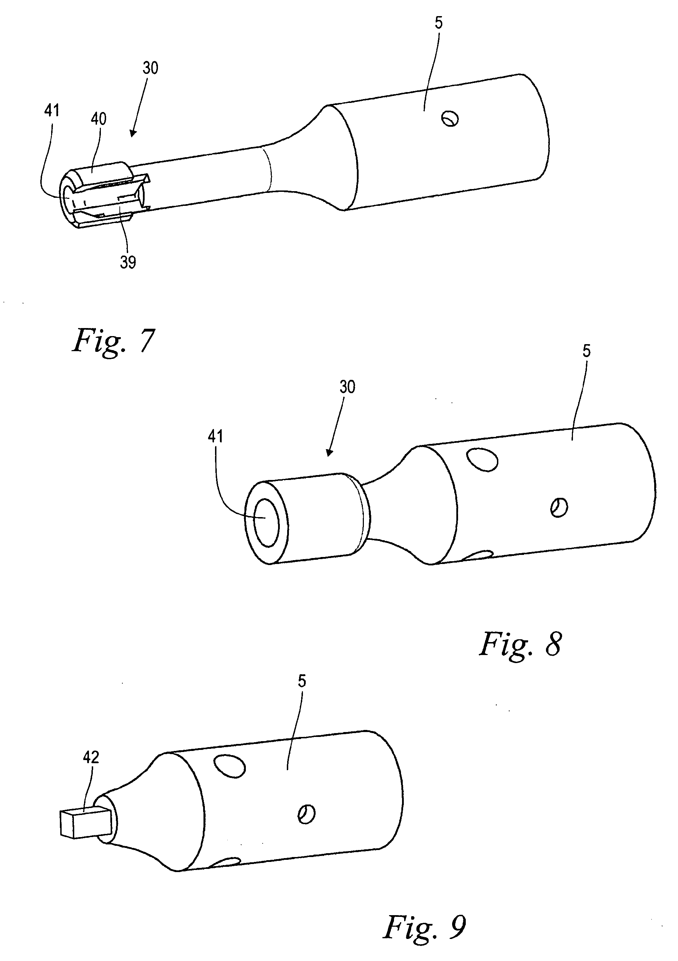

Der Grundkörper 31 des Bohrdübels 17 ist aus einem weichmagnetischen Eisenwerkstoff hergestellt und kann damit bedarfsweise mit oder ohne den Hilfszapfen 32 (Fig. 5) in Folge magnetischer Haltekräfte an einer im Zusammenhang mit Fig. 8 näher beschriebenen Magnethalterung 30 eingespannt werden.

Fig. 7 zeigt in einer vergrößerten Darstellung Einzelheiten der Spannvorrichtung 5 nach Fig. 5 mit der dübelseitigen Spannzange 29. Die Spannzange 29 umfaßt eine Anzahl von Spannlaschen 39, die von einem innenseitig konisch ausgeführten Spannring 40 umgriffen sind. Die Spannlaschen 39 und der Spannring 40 umschließen eine Öffnung 41, in die der Bohrdübel 17 beispielsweise mit der Gewindestange 18 nach Fig. 1 oder dem Hilfszapfen 32 nach Fig. 5 spielfrei eingeführt werden kann. Eine Verschraubung oder eine bajonettartige Verdrehung des Spannringes 40 bewirkt über dessen innenseitige Kegelfläche ein Zusammenpressen der Spannlaschen 39 radial nach innen, in dessen Folge der Bohrdübel 17 fest eingespannt wird. Ein werkzeugloses Lösen kann durch Drehung des Spannringes 40 in umgekehrter Richtung erfolgen.

Beim Ausführungsbeispiel der Spannvorrichtung 5 nach Fig. 8 ist am dübelseitigen Ende eine Magnethalterung 30 vorgesehen, die becherförmig ausgeführt ist und die Öffnung 41 umschließt. In die Öffnung 41 kann der Grundkörper 31 nach Fig. 6 oder der Hilfszapfen 32 des Bohrdübels 17 nach Fig. 5 spielfrei eingesteckt werden. Die Magnethalterung 30 ist als Permanentmagnet ausgeführt und hält dabei über die entstehenden Magnetkräfte zwischen dem Permanentmagneten und dem aus einem weichmagnetischen Eisenwerkstoff gebildeten Bohrdübel 17 den Bohrdübel 17, wobei ein Einführen oder ein Lösen des Bohrdübels 17 werkzeuglos von Hand unter Überwindung der Magnetkräfte erfolgen kann.

Fig. 9 zeigt eine weitere Variante der Spannvorrichtung 5, deren Grundkörper entsprechend der Ausführung nach Fig. 8 ausgebildet ist. An ihrem stirnseitigen Ende ist ein Hilfszapfen 42 vorgesehen, der im gezeigten Ausführungsbeispiel einen quadratischen Querschnitt aufweist. Auf den Hilfszapfen 42 kann ein mit einer entsprechenden Aufnahmeöffnung versehener Bohrdübel 17 beispielsweise mit einem Grundkörper 31 nach Fig. 6 aufgeschoben werden. Bei einer entsprechenden eckigen Ausgestaltung der Aufnahmeöffnung in Verbindung mit dem ebenfalls eckigen Querschnitt des Hilfszapfens 42 ergibt sich eine drehfeste Verbindung des Bohrdübels 17 mit der Spannvorrichtung 5. In Längsrichtung kann die Verbindung frei abziehbar oder mit einer definierten Klemmkraft ausgestaltet sein. Anstelle der gezeigten quadratischen Ausführung des Hilfszapfens 42 kann auch eine andere, von der kreisrunden Form abweichende Querschnittsgestaltung zweckmäßig sein, die zur Übertragung eines Drehmomentes geeignet ist. Bedarfsweise kann aber auch ein kreisrunder Querschnitt vorgesehen sein, wodurch eine drehmomentfreie Kraftübertragung zwischen der Spannvorrichtung 5 und dem Bohrdübel 17 (Fig. 6) gegeben ist.

## Patentansprüche

1. Handgeführtes Elektrowerkzeug mit einem Bohrwerkzeug (2), umfassend einen auf das Bohrwerkzeug (2) wirkenden hochfrequenten Schwingungserreger (3), wobei das Bohrwerkzeug (2) in mindestens einer Eigenschwingungsfrequenz auf die Erregerfrequenz des hochfrequenten Schwingungserregers (3) abgestimmt ist, und wobei das Bohrwerkzeug (2) als Bohrdübel (17) ausgebildet ist, der zum Verbleib in einem durch den Bohrdübel (17) mittels der hochfrequenten Schwingung hergestellten Bohrloch (14) vorgesehen ist.

2. Elektrowerkzeug nach Anspruch 1,
**dadurch gekennzeichnet, daß** das Elektrowerkzeug (1) eine Spannvorrichtung (5) für den Bohrdübel (17) in Form einer werkzeuglos betätigbaren Schnellspannvorrichtung aufweist.

3. Elektrowerkzeug nach Anspruch 2,
**dadurch gekennzeichnet, daß** die Spannvorrichtung (5) eine Spannzange (29) ist.

4. Elektrowerkzeug nach Anspruch 2 oder 3,
**dadurch gekennzeichnet, daß** der Bohrdübel (17) eine Gewindestange (18) aufweist, mit der der Bohrdübel (17) in der Spannvorrichtung (5) gehalten ist.

5. Elektrowerkzeug nach Anspruch 2,
**dadurch gekennzeichnet, daß** die Spannvorrichtung (5) als Magnethalterung (30) ausgeführt ist.

6. Elektrowerkzeug nach Anspruch 2,
**dadurch gekennzeichnet, daß** die Spannvorrichtung (5) einen Hilfszapfen (42) aufweist, der zum Aufstecken des Bohrdübels (17) vorgesehen ist.

7. Elektrowerkzeug nach einem der Ansprüche 2 bis 6,
**dadurch gekennzeichnet, daß** die Spannvorrichtung (5) aus einem Material mit geringer Schallabsorbtion und insbesondere aus Titan gefertigt ist.

8. Elektrowerkzeug nach einem der Ansprüche 1 bis 7,
**dadurch gekennzeichnet, daß** der Bohrdübel (17) statisch fest und insbesondere drehfest in der Spannvorrichtung (5) gehalten ist.

9. Elektrowerkzeug nach einem der Ansprüche 1 bis 8,
**dadurch gekennzeichnet, daß** die Erregerfrequenz und die Eigenschwingungsfrequenz oberhalb von 10 kHz und insbesondere im Ultraschallbereich liegen.

10. Elektrowerkzeug nach einem der Ansprüche 1 bis 9,
**dadurch gekennzeichnet, daß** der Schwingungserreger (3) als Piezoerreger (4) ausgebildet ist.

11. Elektrowerkzeug nach einem der Ansprüche 1 bis 10,
**dadurch gekennzeichnet, daß** im Bereich des Bohrdübels (17) eine Absaugeinrichtung für Bohrstaub vorgesehen ist.

12. Elektrowerkzeug nach einem der Ansprüche 1 bis 11,
**dadurch gekennzeichnet, daß** im Bereich des Bohrdübels (17) eine Zuführeinrichtung für eine insbesondere mit abrasiven Bohrhilfsmitteln versehene Bohrflüssigkeit vorgesehen ist.

13. Elektrowerkzeug nach Anspruch 11 oder 12,
**dadurch gekennzeichnet, daß** die Absaugeinrichtung bzw. die Zuführeinrichtung einen Sammler (6) umfaßt, der mit einem am Bohrdübel (17) angeordneten Saug-/Spülkanal (7) verbunden ist.

14. Verfahren zum Bohren eines Bohrloches (14) in Stein oder steinähnlichen Werkstoffen wie Beton, Mauerwerk oder dergleichen und zum Einsetzen eines Dübels in das Bohrloch (14) mit einem Elektrowerkzeug (1) nach einem der Ansprüche 1 bis 13, bei dem mittels des zu hochfrequenten Schwingungen angeregten, als Bohrdübel (17) ausgebildeten Bohrwerkzeuges (2) das Bohrloch (14) hergestellt und der Bohrdübel (17) in das Bohrloch (14) eingesetzt wird.

15. Verfahren nach Anspruch 14,
**dadurch gekennzeichnet, daß** der Dübel (17) nach Erreichen einer vorgesehenen Bohrtiefe (t) von der Spannvorrichtung (5) entkoppelt wird und im Bohrloch (14) verbleibt.
